# EUROPEAN PATENT SPECIFICATION

(11) **EP 1 847 781 B1**
(45) Date of publication and mention of the grant of the patent: **29.03.2017**
(21) Application number: 07106141.0
(22) Date of filing: 13.04.2007
(51) Int. Cl.: F24D 3/08, F24D 10/00, F24D 19/10, F24H 1/52, F24H 9/14

(54) **Hydraulic circuit for a heating and sanitary water system fed from a centralized hot water suply**
Hydraulischer Kreislauf für Zentralheizungs- und Brauchwasserheizungsanlage gespeist von einer zentralen Warmwasserversorgung
Circuit hydraulique pour système de chauffage d'eau sanitaire et de chauffage alimenté d'une source de chaleur centralisée

(30) Priority: 19.04.2006 IT MI20060773
(43) Date of publication of application: 24.10.2007
(73) Proprietor: FUGAS SPA, 20090 Trezzano sul Naviglio (Milan) (IT)
(72) Inventor: Fugazza, Giuseppe, 20090, Trezzano sul Naviglio (MI) (IT)
(74) Representative: Robba, Eugenio

(56) References cited:
- EP-A- 1 408 292
- EP-A- 1 528 330
- EP-A- 1 582 824
- EP-A2- 0 797 057
- EP-A2- 1 130 342
- DE-A1- 19 633 930
- DE-A1- 19 912 284
- DE-U1- 29 817 279
- FR-A1- 2 475 196

## Description

The present invention concerns hydraulic groups to be used in peripheral thermal units or modules for controlling the dwelling distribution of hot water that is being produced either at a station of a district heating (or teleheating) system, or at a plant located near/in the dwelling building. Such hot water is used as a heat source for the dwelling heating system and for delivering sanitary warm water, or shortly SWW.

It has long been a well known practice to use hot water produced at a centralized location, near to or remote from a building, in order to get the hot water for heating the single user premise units as well as for the sanitary warm water of the building. Typically, by using a hydraulic circuit located in peripheral thermal control units, the water arriving from a central supply - at a temperature in the order of 70-80°C - feeds the heating elements (radiators) and is returned to the hot water supply, while sanitary warm water is obtained by heating the water drawn from the mains in a heat exchanger into which exchanger the hot water from the "centralized" source is diverted by a three ways valve or similar device, and is circulated as a heating liquid.

Installations of this kind are particularly advantageous because of their (relatively) high combustion efficiency by using a large boiler or still better a plurality of boilers in succession so as to make the best of their efficiencies, or in some cases of district heating, by using the low-cost hot water obtained as a "by-product" of industrial processes or from natural sources.

Moreover these installations allow for a considerable cost reduction in respect of using a single boiler for each user plant, do not require tubes for carrying the natural gas to each boiler, while substantially offering in practice the same use flexibility of individual heating plants.

The known hydraulic groups nevertheless have some drawbacks that currently limit their advantages.

In this kind of installations, the proper setting of each plant associated to a single dwelling unit with respect to the conditions of use of the centralized plant, is often complex or anyhow requires specialized and expensive devices. As an example, the operation conditions of the different modules can be quite different from one another because of several reasons such as, for instance, the floor at which the dwelling unit is located, its exposure and its position in respect of adjacent units, the way the consumer uses both the heating and the sanitary warm water, possible pressure drops in the heating plant tubes, etc. A well balanced setting is nevertheless essential to achieve an acceptable comfort for each dwelling unit in order to achieve a proper operation of a module that is independent of the distance from the central plant and of the several local conditions.

Besides, in the known art, the sizes of the peripheral thermal heating units (modules) are non negligible as for what concerns their installation. In fact, the units are often embedded into the walls of the building or flat and the hydraulic circuit accounting for most of the unit bulk brings about a limit.

Finally, in the known devices often it is not easy to exclude a user's module from the debiting process of the centralized plant when there is no demand of hot/warm water by the module.

DE 19633930 on which the preamble of claim 1 is based shows an example of a device for providing for the heating requirements of a living unit which is supplied by a central heating system. The problem of how to properly set each plant with respect to the conditons of use which depend on the way the consumer uses both the heating and the sanitary warm water however stili remains unsolved.

An object of the present invention is to overcome the above illustrated drawbacks and limitations, and more particularly to provide a hydraulic circuit or assembly for realizing the above mentioned user plants that is extremely compact, simple to be connected with the remaining of the plant, allows for an easy and simplified servicing, and is quite cheap in respect of the construction and installation costs.

According to the invention, these objects are achieved through a hydraulic circuit for controlling the dwelling heating and the production of sanitary warm water from a central supply of hot water as claimed in the annexed claims.

The invention will now be disclosed with reference to the attached drawings illustrating preferred but not limiting embodiments of the invention, in which:
Fig. 1 schematically illustrates the structure of a hydraulic circuit according to the present invention;
Fig. 2 illustrates another embodiment of the hydraulic circuit according to the present invention;
Fig.s 3, 4 and 7 are respectively a front view, a back view and a perspective view of the delivery hydraulic group of Fig. 1;
Fig.s 5, 6, and 8 are respectively a front view, a back view and a perspective view of the return hydraulic group of Fig. 1; and
Fig.s 9 and 10 are respectively a perspective view and a front view of the bypass group.

Throughout all the Figures the same references have been used for indicating equal or functionally equivalent parts and for sake of clarity the directions of the water flows are shown by arrows.

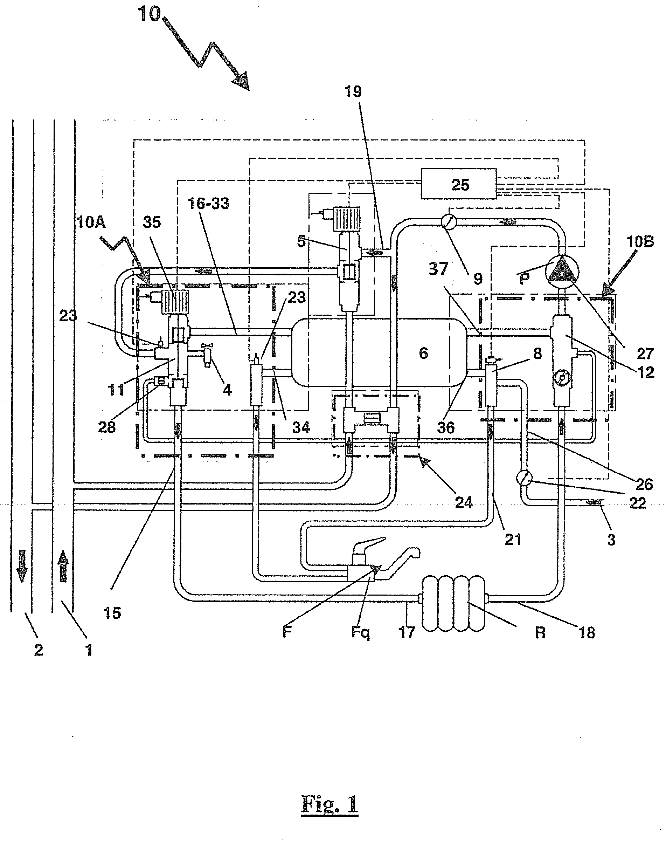

Firstly referring to Fig. 1, the pipes indicated with references 1 and 2, respectively delivery and return pipes, carry the hot water (obtained in various ways) coming from the central supply and used for heating purposes and for the production of SWW. A module 10 according to the invention is connected to the above tubes for each flat or dwelling unit.

For simplicity sake, the heating plant of the end user is schematically shown as a single radiator member R, whereas the devices for delivering the sanitary (both warm and cold) water are schematically represented by a tap F equipped with a regulator Fq adapted to blend the sanitary warm water with the water coming from the mains 3, to obtain sanitary water at a desired temperature.

A module 10 according to the invention comprises a delivery group 10A, a return group 10B, both connected to a water-water heat exchanger 6, typically a plate heat exchanger, and a bypass device 24.

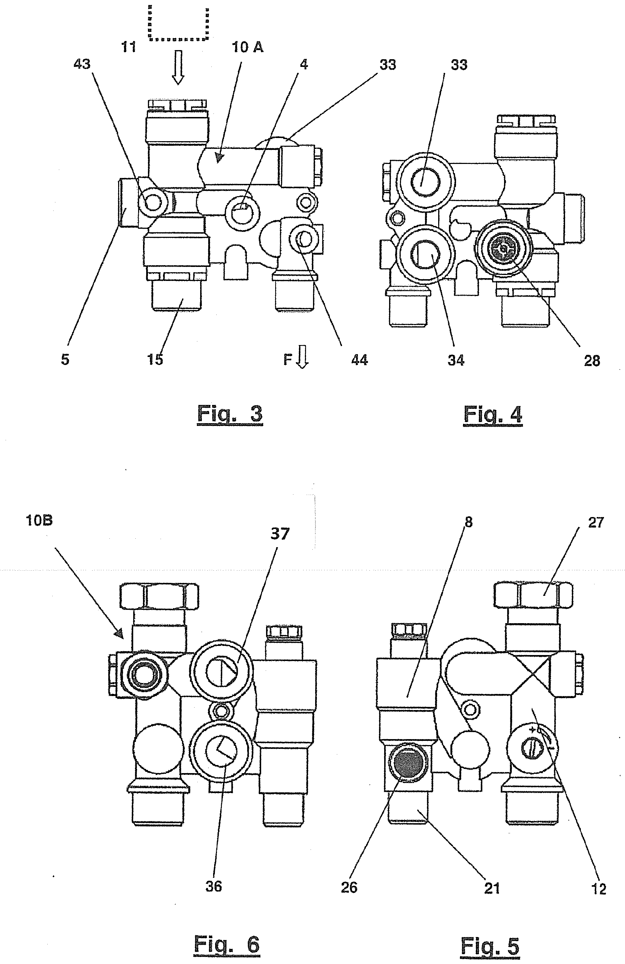

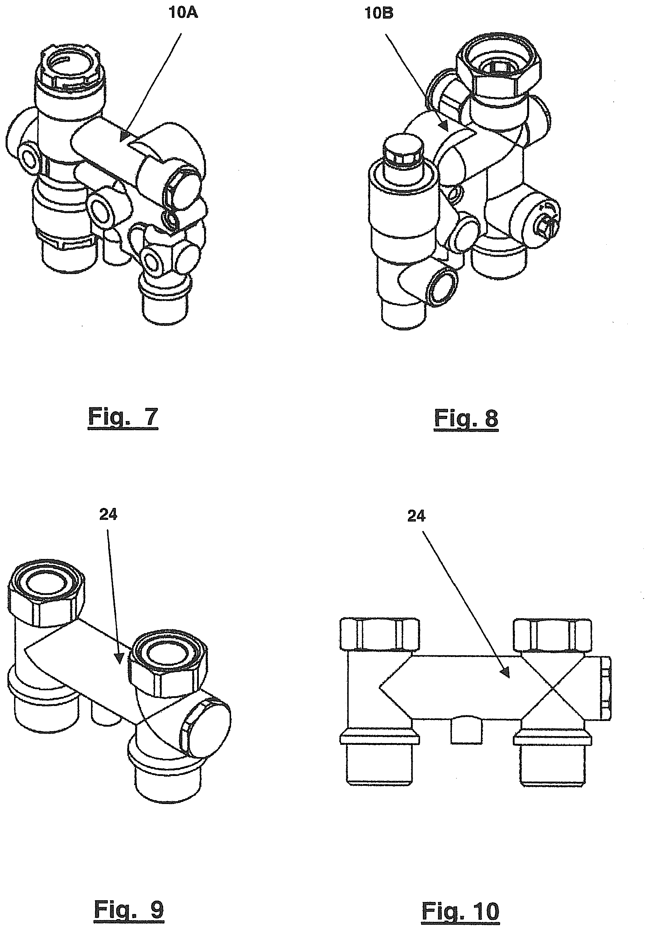

A construction of the delivery group 10A is shown in Fig.s 3, 4 and 7, and comprises a routing device 11, typically a three-way valve, operated through a motor 35 and connected to the delivery pipe 1 of the central hot water supply through a three-way mixing valve indicated by reference 5, this valve too being motorized and its function will be illustrated later. A connection 33 on the group 10A brings the hot water to the heat exchanger 6 and a connection 34 receives the sanitary warm water coming out from the heat exchanger 6.
The delivery group 10A further includes seats or recesses for two temperature sensors 23, e.g. comprising NTC probes or resistors, the sensors being located on the three-way valve 11 and on the outlet of the sanitary water, respectively. Fig. 3 shows the threaded holes or recesses 43, 44 and a threaded hole 4 for a tap for emptying the domestic heating plant.

The three-way valve 11 has two outlets 15 and 16. Through a control that will be illustrated in more details later, to such two outlets 15 and 16 there can be routed either the hot water drawn from the feeding pipe 1 or the water obtained by mixing the water from the pipe 1 with a fraction of the water coming from the return of the user heating plant R through the mixing valve 5. The water from the return of the heating plant R is still hot, but at a temperature lower than that coming from the pipe 1.

The delivery group 10A further comprises an additional automatic (secondary) bypass device 28 connected to the return group 10B and this devices intervenes in case of large losses in the heating plant to maintain substantially constant the flowrate of the water circulating through the pump.

In the embodiment illustrated in Fig. 1, the return group 10B includes a splitter valve 12 for regulating the flow rate of the water circulating through the plant, a flow sensor 8, preferably formed as a Hall effect sensor, adapted to sense a request of SWW from the user, an inlet connection 26 for the cold water coming from the water mains 3, in case metered for debiting purposes by a flow metering device 22, and an output connection 21 for the metered cold water to be sent to the mixer Fq of the tap F. The return group further comprises a connection 27 for fitting a circulator device, e.g. a pump P, and two connections for the water-water plate heat exchanger 6, respectively a return connection 37 of the centralized hot water and a connection 36 for the inlet of the cold water from the water mains 3.

Fig.s 5, 6 and 8 illustrate the metal member forming (with additional not shown components) the subgroup 10B.

The splitting valve 12 regulates the flow rate of the water circulating through the plant so as to compensate possible pressure differences or drops in the plants of different housing units, for instance in order to prevent overheatings.

The operation is managed by a suitably programmed electronic control unit 25 to which temperature data, and possibly flow rate data are input, which unit generates the commands - schematically shown in broken lines - for the different components, and supplies the control signals for the concerned actuators.

When there is no demand for sanitary warm water, or only cold water for domestic use is drawn from the tap F, the device 11 diverts the hot incoming water onto the outlet 15 that is connected to the user's heating plant (schematically represented by the inlet 17 of radiator R). The outlet 18 of radiator R is connected via the return group 10B and the pump P to the return pipe 2 of the central hot water supply. A connection is further provided for diverting a part of the return water to the inlet 19 of the already mentioned mixing valve 5.

When sanitary warm water is requested, the device 11 diverts the hot water (that can be either the water from the pipe 1 or water at an intermediate temperature obtained by mixing the water from the pipe 1 with a fraction of the water returning from the radiators through the mixing valve 5) toward the water-water heat exchanger 6, typically a plate heat exchanger, in the secondary circuit of which the cold water from the mains 3 is being circulated, this latter being heated and delivered through the connection to the mixing/delivering tap F to be delivered as SWW.

The splitting valve 12 located in the return group 10B regulates the flow rate of the water circulating through the heating plant, which is a fundamental parameter for properly balancing the single plants with respect to the centralized plant.

In respect of the functions of the mixing valve 5, it is to be pointed out that in the known plants usually the temperature of the water delivered to the heat exchanger 6 for heating the sanitary water is substantially fixed, and in case it is adjusted during the installation by setting a potentiometer in the control unit.

Thanks to the presence of a mixing valve 5 according to the invention, a particularly effective regulation function can be achieved. In fact the valve, controlled by the unit 25, mixes the water from the centralized source via the pipe 1 (at 70-80°C) with the return water of the domestic heating plant (typically at a temperature of 50-60°C) so as to obtain the temperatures requested or set by the user for the heating water and the sanitary water. The regulation is accomplished through the values measured by the respective temperature probes 23. This way it is possible to modify, both the temperature of the water delivered to the heating elements and the temperature of the sanitary water in accordance with the specific demands of the plant and of the consumer.

The metering of the thermal energy to be debited to the single user is accomplished through the device 9 inserted downstream of the pump P, typically a thermal energy counter in accordance with the flow rate and temperature parameters measured by the device.

Moreover a device 24 for bypassing the flow rate of the centralized plant in case there is no demand from the module to prevent a counting of consumed calories, is fitted to the connections between pipes 1 and 2 and the circuit according to the invention. Fig.s 9 and 10 show a preferred embodiment of the bypass device 24, formed by a brass block provided with connections to the pipes 1 and 2 on one side, and to the rest of the circuit on the other side, and incorporating a device capable of putting in communication the delivery pipe with the return pipe in correspondence of a predetermined differential pressure.

In addition to the inlet 26, in the return group 10B there is further advantageously integrated an outlet connection 21 for the sanitary cold water to allow a simple and cheap fitting of a counter of the consumed sanitary water (22) without need to mount an additional component (typically a three three-way valve connection).

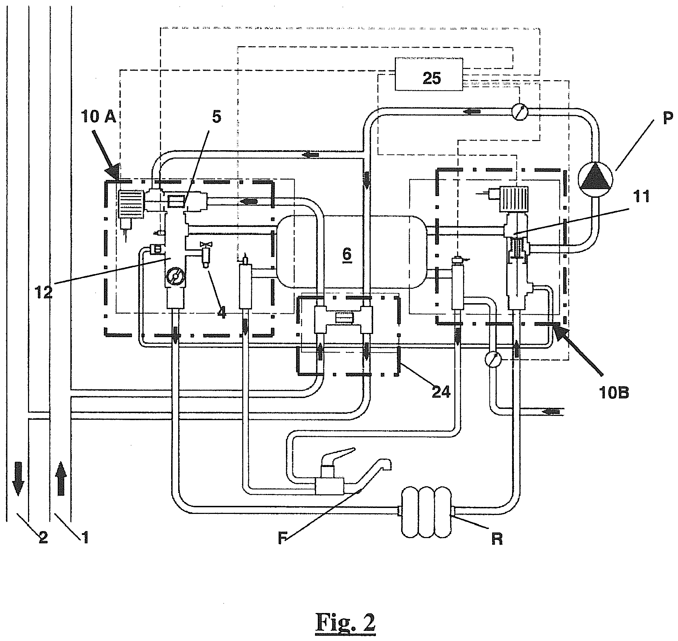

According to another embodiment of the invention, illustrated in Fig. 2, the mixing valve 5 and the splitting valve 12 are incorporated in the delivery group 10A, whereas the three-way valve 11 is housed in the return group 10B, thus rendering the circuit more compact and avoiding the use of a separate component and reducing the costs. The remaining components are substantially equal or equivalent to those of the embodiment of Fig. 1 and are not illustrated in detail.

The circuit according to the invention is compact and provides for advantageous original solutions. Particularly, the integration of a splitting valve in one of the two components of the hydraulic group allows for a more precise balancing of the single user plant.

The integration of the mixing valve in one of the two hydraulic components of the circuit allows to reduce the encumbrances and the cost in respect of using a loose component with the associated connections.

Finally, the integration of a double attack for sanitary water in the return group allows for a simple and economic assembling of a counter of the consumed sanitary water without having to resort to an additional connection for a three-way valve.

The delivery and return groups and the bypass group are made of metal, for instance brass, preferably in a monolithic form or using metal components assembled together in any practical way.

Although the invention has been illustrated with reference to preferred embodiments, it is susceptible in general of other applications and changes that fall within the protective scope as described by the appended claims, as will be evident to the skilled of the art.

## Claims

1. A hydraulic circuit (10) for providing heating hot water and sanitary warm water to a user premise, said circuit being connected to a central hot water supply (1, 2) and comprising a pump (P), a water-water heat exchanger (6), a routing device (11) and control means (25) for delivering central hot water, through said routing device (11), respectively to the user heating plant (R) or to said heat exchanger (6) when the user requires sanitary warm water,
said circuit further comprising:
- a delivery hydraulic group (10A) including two temperature sensors (23) and a return hydraulic group (10B) connected to one another by said water-water heat exchanger (6) adapted to produce sanitary warm water; and
- a mixing valve (5) to divert a part of the return water from said heating plant (R) and mix it with the hot water from said central supply hot water (1, 2) under the control of said control means (25), **characterized in that**
- said delivery group (10A) comprises a metal member which incorporates at least a three way valve as said routing device (11) or a splitting valve (12) and two seats (43,44) for said temperature sensors (23), whereby the temperature sensors (23) are located on said routing device (11) or said splitting valve (12) and on the outlet of the sanitary water of said metal member, respectively, and **in that**
- said control means (25) comprises a programmed electronic control unit (25) to which temperature data are input, said control unit (25) being programmed to generate the commands for the different components and supply control signals for the concerned actuators (5,11), whereby the control unit (25) is configured such, that the regulation of the mixing valve (5) to obtain temperatures requested or set by the user for the heating water and the sanitary water is accomplished through the values measured by said temperature sensors (23).

2. A hydraulic circuit (10) as claimed in claim 1, **characterized in that** said temperature sensors (23, 23) are, respectively of said heating water and of said sanitary warm water coming out from said water-water heat exchanger (6).

3. A hydraulic circuit (10) as claimed in claim 1 or 2, **characterized in that** said splitting valve (12) is for changing the water flow rate of the plant and allowing its balancing.

4. A hydraulic circuit (10) as claimed in claims 1 to 3, **characterized in that** said routing device (11) is integrated in said hydraulic delivery group (10A).

5. A hydraulic circuit (10) as claimed in claim 4, **characterized in that** said splitting valve (12) is integrated in said return group (10B).

6. A hydraulic circuit (10) as claimed in claims 1 to 3, **characterized in that** said routing device (11) is integrated in said hydraulic return group (10B).

7. A hydraulic circuit (10) as claimed in claim 6, **characterized in that** said splitting valve (12) is integrated in said delivery group (10A).

8. A hydraulic circuit (10) as claimed in claim 6 or 7, **characterized in that** said mixing valve (5) is integrated in said delivery group (10A).

9. A hydraulic circuit (10) as claimed in the preceding claims, **characterized in that** it comprises a bypass device (24) for excluding said hydraulic circuit, said bypass device being connected between the pipes (1, 2) coming from said supply of central hot water (1, 2) and said delivery and return groups (10A, 10B).

10. A hydraulic circuit (10) as claimed in the preceding claims, **characterized in that** it comprises in said return group (10B) two connections, respectively an inlet connection (26) and an outlet connection (21) for said sanitary water, that are integrated in said return group (10B).

11. A hydraulic circuit (10) as claimed in the preceding claims, **characterized in that** it provides for a thermal energy metering device (9), inserted downstream of said pump (P).

12. A hydraulic circuit (10) as claimed in the preceding claims, **characterized in that** said two seats (43, 44) for said temperature sensors (23,23) comprise threaded holes or recesses.

13. A hydraulic circuit (10) as claimed in any of the preceding claims, **characterized in that** said metal member provides a seat (4) for a tap (4) for emptying the heating plant.

14. A hydraulic circuit (10) as claimed in claim 1, **characterized in that** said return hydraulic group (10B) incorporates splitting valve (12), a seat for a flow sensor (8), an inlet connection (26) to the water mains (3).

15. A hydraulic circuit (10) as claimed in claim 1, **characterized in that** said return group (10B) comprises a metal member which incorporates a connection (27) for mounting a pump (P), and two connections (36a,36b) for the connection to said water-water plate heat exchanger (6).

16. A hydraulic circuit (10) as claimed in claim 9, **characterized in that** said bypass device (24) incorporates two connections for the connection to said delivery and return pipes (1, 2) of the supply of central hot water, two connections to the remaining of said hydraulic circuit, and a device adapted to put in communication said delivery pipe (2) with said return pipe (1) upon reaching a predetermined differential pressure.

## Patentansprüche

1. Hydraulischer Kreislauf (10) zur Bereitstellung von heißem Heizungswasser und warmem Brauchwasser für einen lokalen Benutzer, wobei der Kreislauf an eine zentrale Warmwasserversorgung (1, 2) angeschlossen ist und eine Pumpe (P), einen Wasser-Wasser-Wärmetauscher (6), eine Führungsvorrichtung (11) und Steuermittel (25) aufweist, um über die Führungsvorrichtung (11), Warmwasser jeweils zentral an die Heizungsanlage (R) des Benutzers oder an den Wärmetauscher (6) zu liefern, wenn der Benutzer warmes Brauchwasser benötigt,
wobei der Kreislauf ferner Folgendes umfasst:
- eine hydraulische Fördergruppe (10A) mit zwei Temperatursensoren (23) und einer hydraulischen Rückführungsgruppe (10B), die über den Wasser-Wasser-Wärmetauscher (6) zur Erzeugung des Brauchwassers mit der Fördergruppe (10A) miteinander verbunden ist und
- ein Mischventil (5), um einen Teil des Rücklaufwassers von der Heizungsanlage (R) umzuleiten und um dieses mit dem Warmwasser von der zentralen Warmwasserversorgung (1, 2) unter Steuerung der Steuermittel (25) zu mischen, **dadurch gekennzeichnet, dass**
- die Förderungsgruppe (10A) ein Metallelement aufweist, das mindestens ein Drei-Wege-Ventil als die Führungsvorrichtung (11) oder ein Spaltventil (12) und zwei Aufnahmen (43, 44) für die Temperatursensoren (23) aufweist, die jeweils auf der Führungsvorrichtung (11) oder dem Spaltventil (12) und auf dem Auslass des Brauchwassers des Metallelements angeordnet sind, und dass
- die Steuermittel (25) eine programmierte elektronische Steuereinheit (25) aufweist, in welche Temperaturdaten eingegeben werden, und die so programmiert ist, das die Befehle für die unterschiedlichen Komponenten erzeugt und Versorgungssteuersignale für die in Frage kommenden Stellglieder (5, 11) liefert, wobei die Steuereinheit (25) so ausgebildet ist, dass die Regelung des Mischventils (5), um geforderte oder durch den Benutzer eingestellte Temperaturen für das Heizungswasser und das Brauchwasser zu erhalten, durch die von den Temperatursensoren (23) gemessenen Werte erreicht wird.

2. Hydraulischer Kreislauf (10) nach Anspruch 1,
**dadurch gekennzeichnet, dass** die Temperatursensoren (23, 23) jeweils für das aus dem Wasser-Wasser-Wärmetauscher (6) kommende Heizwasser und Brauchwasser vorgesehen sind.

3. Hydraulischer Kreislauf (10) nach Anspruch 1 oder 2,
**dadurch gekennzeichnet, dass** das Spaltventil (12) zur Änderung und zur Ermöglichung einer Lastverteilung der Wasserdurchflussrate der Anlage vorgesehen ist.

4. Hydraulischer Kreislauf (10) nach Anspruch 1 bis 3, **dadurch gekennzeichnet, dass** die Führungsvorrichtung (11) in die hydraulische Fördergruppe (10A) integriert ist.

5. Hydraulischer Kreislauf (10) nach Anspruch 4,
**dadurch gekennzeichnet, dass** das Spaltventil (12) in die Rückführungsgruppe (10B) integriert ist.

6. Hydraulischer Kreislauf (10) nach Anspruch 1 bis 3,
**dadurch gekennzeichnet, dass** die Führungsvorrichtung (11) in die hydraulischen Rückführungsgruppe (10B) integriert ist.

7. Hydraulischer Kreislauf (10) nach Anspruch 6,
**dadurch gekennzeichnet, dass** das Spaltventil (12) in die Fördergruppe (10A) integriert ist.

8. Hydraulischer Kreislauf (10) nach Anspruch 6 oder 7,
**dadurch gekennzeichnet, dass** das Mischventil (5) in der Förderungsgruppe (10A) integriert ist.

9. Hydraulischer Kreislauf (10) nach einem der vorhergehenden Ansprüche,
**dadurch gekennzeichnet, dass** er eine Bypassvorrichtung (24) zum Umgehen des hydraulischen Kreislaufs aufweist, wobei die Bypassvorrichtung zwischen den Rohren (1, 2) angeschlossen ist, die von der zentralen Warmwasserversorgung (1, 2) und den Förder- und Rückführungsgruppen (10A, 10B) kommen.

10. Hydraulischer Kreislauf (10) nach einem der vorhergehenden Ansprüche,
**dadurch gekennzeichnet, dass** er in der Rückführungsgruppe (10B) zwei Verbindungen, jeweils eine Einlassverbindung (26) und eine Auslassverbindung (21) für das Brauchwasser, aufweist, die in die Rückführungsgruppe (10B) integriert sind.

11. Hydraulischer Kreislauf (10) nach einem der vorhergehenden Ansprüche
**dadurch gekennzeichnet, dass** er eine Wärmeenergie-Messvorrichtung (9) aufweist, die stromabwärts der Pumpe (P) eingesetzt ist.

12. Hydraulischer Kreislauf (10) nach einem der vorhergehenden Ansprüche,
**dadurch gekennzeichnet, dass** die zwei Aufnahmen (43, 44) für die Temperatursensoren (23, 23) Gewindebohrungen oder Vertiefungen aufweisen.

13. Hydraulischer Kreislauf (10) nach einem der vorhergehenden Ansprüche,
**dadurch gekennzeichnet, dass** das Metallelement eine Aufnahme (4) für einen Abflusshahn (4) zum Entleeren der Heizungsanlage aufweist.

14. Hydraulischer Kreislauf (10) nach Anspruch 1,
**dadurch gekennzeichnet, dass** die hydraulische Rückführungsgruppe (10B) ein Spaltventil (12), eine Aufnahme für einen Durchflusssensor (8) und einen Einlassanschluss (26) für die Wasserhauptleitungen (3) aufweist.

15. Hydraulischer Kreislauf (10) nach Anspruch 1,
**dadurch gekennzeichnet, dass** die Rückführungsgruppe (10B) ein Metallelement mit einem Anschluss (27) zum Befestigen einer Pumpe (P) und zwei Anschlüssen (36a, 36b) zum Anschließen des Wasser-Wasser-Plattenwärmetauschers (6) aufweist.

16. Hydraulischer Kreislauf (10) nach Anspruch 9,
**dadurch gekennzeichnet, dass** die Bypassvorrichtung (24) zwei Anschlüsse zur Verbindung mit den Förder-und Rückführungsrohren (1, 2) der zentralen Warmwasserversorgung, zwei Anschlüsse zu dem Rest des hydraulischen Kreislaufs und eine Vorrichtung aufweist, die das Zuführrohr (2), bei Erreichen eines vorbestimmten Differenzdrucks, mit dem Rückführrohr (1) verbindet.

## Revendications

1. Circuit hydraulique (10) pour fournir de l'eau chaude de chauffage et de l'eau tiède sanitaire à un local d'utilisateur, ledit circuit étant relié à une source d'eau chaude centrale (1, 2) et comprenant une pompe (P), un échangeur de chaleur eau-eau (6), un dispositif d'acheminement (11) et des moyens de commande (25) pour distribuer l'eau chaude centrale, par l'intermédiaire dudit dispositif d'acheminement (11), respectivement à l'installation de chauffage d'utilisateur (R) ou audit échangeur de chaleur (6) lorsque l'utilisateur requiert de l'eau tiède sanitaire,
ledit circuit comprenant en outre :
- un groupe hydraulique de distribution (10A) comprenant deux capteurs de température (23) et un groupe hydraulique de retour (10B) reliés l'un à l'autre par ledit échangeur de chaleur eau-eau (6) adapté pour produire de l'eau tiède sanitaire ; et
- une vanne de mélange (5) pour dévier une partie de l'eau de retour provenant de ladite installation de chauffage (R) et la mélanger avec l'eau chaude provenant de ladite source d'eau chaude centrale (1, 2) sous la commande desdits moyens de commande (25), **caractérisé par le fait que**
- ledit groupe de distribution (10A) comprend un élément métallique qui incorpore au moins une vanne à trois voies en tant que ledit dispositif d'acheminement (11) ou une vanne de séparation (12) et deux sièges (43, 44) pour lesdits capteurs de température (23), ce par quoi les capteurs de température (23) sont situés sur ledit dispositif d'acheminement (11) ou ladite vanne de séparation (12) et sur la sortie de l'eau sanitaire dudit élément métallique, respectivement, et **par le fait que** :
- lesdits moyens de commande (25) comprennent une unité de commande électronique programmée (25) dans laquelle des données de température sont entrées, ladite unité de commande (25) étant programmée pour générer les instructions pour les différents composants et fournir des signaux de commande pour les actionneurs concernés (5, 11), ce par quoi l'unité de commande (25) est configurée de telle sorte que la régulation de la vanne de mélange (5) pour obtenir des températures demandées ou définies par l'utilisateur pour l'eau de chauffage et l'eau sanitaire est accomplie par l'intermédiaire des valeurs mesurées par lesdits capteurs de température (23).

2. Circuit hydraulique (10) selon la revendication 1, **caractérisé par le fait que** lesdits capteurs de température (23, 23) sont, respectivement, pour ladite eau de chauffage et ladite eau tiède sanitaire provenant dudit échangeur de chaleur eau-eau (6).

3. Circuit hydraulique (10) selon la revendication 1 ou 2, **caractérisé par le fait que** ladite vanne de séparation (12) est pour changer le débit d'eau de l'installation et permettre son équilibrage.

4. Circuit hydraulique (10) selon les revendications 1 à 3, **caractérisé par le fait que** ledit dispositif d'acheminement (11) est intégré dans ledit groupe de distribution hydraulique (10A).

5. Circuit hydraulique (10) selon la revendication 4, **caractérisé par le fait que** ladite vanne de séparation (12) est intégrée dans ledit groupe de retour (10B).

6. Circuit hydraulique (10) selon les revendications 1 à 3, **caractérisé par le fait que** ledit dispositif d'acheminement (11) est intégré dans ledit groupe de retour hydraulique (10B).

7. Circuit hydraulique (10) selon la revendication 6, **caractérisé par le fait que** ladite vanne de séparation (12) est intégrée dans ledit groupe de distribution (10A).

8. Circuit hydraulique (10) selon la revendication 6 ou 7, **caractérisé par le fait que** ladite vanne de mélange (5) est intégrée dans ledit groupe de distribution (10A).

9. Circuit hydraulique (10) selon les revendications précédentes, **caractérisé par le fait qu'**il comprend un dispositif de dérivation (24) pour exclure ledit circuit hydraulique, ledit dispositif de dérivation étant relié entre les tuyaux (1, 2) provenant de ladite source d'eau chaude centrale (1, 2) et desdits groupes de distribution et de retour (10A, 10B).

10. Circuit hydraulique (10) selon les revendications précédentes, **caractérisé par le fait qu'**il comprend, dans ledit groupe de retour (10B), deux raccordements, respectivement un raccordement d'entrée (26) et un raccordement de sortie (21) pour ladite eau sanitaire, qui sont intégrés dans ledit groupe de retour (10B).

11. Circuit hydraulique (10) selon les revendications précédentes, **caractérisé par le fait qu'**il prévoit un dispositif de mesure d'énergie thermique (9), inséré en aval de ladite pompe (P).

12. Circuit hydraulique (10) selon les revendications précédentes, **caractérisé par le fait que** lesdits deux sièges (43, 44) pour lesdits capteurs de température (23, 23) comprennent des trous ou évidements filetés.

13. Circuit hydraulique (10) selon l'une quelconque des revendications précédentes, **caractérisé par le fait que** ledit élément métallique fournit un siège (4) pour un robinet (4) pour vider l'installation de chauffage.

14. Circuit hydraulique (10) selon la revendication 1, **caractérisé par le fait que** ledit groupe hydraulique de retour (10B) incorpore la vanne de séparation (12), un siège pour un capteur de débit (8), un raccordement d'entrée (26) au réseau de distribution d'eau (3).

15. Circuit hydraulique (10) selon la revendication 1, **caractérisé par le fait que** ledit groupe de retour (10B) comprend un élément métallique qui incorpore un raccordement (25) pour monter une pompe (P), et deux raccordements (36a, 36b) pour le raccordement audit échangeur de chaleur à plaques eau-eau (6).

16. Circuit hydraulique (10) selon la revendication 9, **caractérisé par le fait que** ledit dispositif de dérivation (24) incorpore deux raccordements pour le raccordement auxdits tuyaux de distribution et de retour (1, 2) de la source d'eau chaude centrale, deux raccordements au reste dudit circuit hydraulique, et un dispositif apte à mettre ledit tuyau de distribution (2) en communication avec ledit tuyau de retour (1) lorsqu'une pression différentielle prédéterminée est atteinte.
